# DEMANDE DE BREVET EUROPEEN

(11) **EP 4 167 264 A2**
(43) Date de publication de la demande: **19.04.2023**
(21) Numéro de dépôt: 22200570.4
(22) Date de dépôt: 10.10.2022
(51) Int. Cl.: H01J 23/033, H01J 23/12, H01J 25/02

(54) **SYSTÈME ÉLECTRONIQUE MUNI D'UN CIRCUIT DE REFROIDISSEMENT À FLUIDE CALOPORTEUR**

(30) Priorité: 14.10.2021 FR 2110917
(71) Demandeur: THALES, 92400 Courbevoie (FR)
(72) Inventeur: LEGGIERI, Alberto, 78141 VELIZY-VILLACOUBLAY Cedex (FR); LEGRAND, François, 78141 VELIZY-VILLACOUBLAY Cedex (FR); MARCHESIN, Rodolphe, 78141 VELIZY-VILLACOUBLAY Cedex (FR); ALLIO, Andrea, 10129 TORINO (IT); DIFONZO, Roza, 10129 TORINO (IT); SALVODI, Laura, 10129 TORINO (IT)
(74) Mandataire: Atout PI Laplace

(57) **Abrégé**

Système électronique comprenant :
- une enveloppe externe (11) ;
- une paroi (12) de cavité interne (13) à refroidir ;
- au moins une liaison fixe fixant la paroi externe (12) de la cavité interne (13) à refroidir à l'enveloppe externe (11) ;
- un circuit de refroidissement (14) à fluide caloporteur comprenant des rainures (15) sur la surface externe (16) de la paroi (12) de cavité interne (13) et une chemise (17) comprenant une portion flexible (18) disposée à fleur de la surface externe (16) de la paroi externe (12) de la cavité interne (13), formant des mini-canaux (19) avec lesdites rainures (15) ;
- une extension radiale de la paroi 12 de cavité interne 13 réalisant des points de liaison destinés à maintenir en place la chemise 17 ; et
- un espace (20) entre la paroi externe (12) de la cavité interne (13) et la chemise (17) au niveau de la portion flexible (18) de la chemise (17).

## Description

L'invention porte sur un système électronique muni d'un circuit de refroidissement à fluide caloporteur.

Le domaine technique d'application de la présente invention est la technologie des dispositifs électroniques. Cette invention répond aux besoins des systèmes de refroidissement à haute performance pour les éléments soumis à des conditions de chaleur élevée, et notamment pour le refroidissement de cavités résonantes d'un gyrotron.

Afin de limiter la dilatation thermique d'éléments de dispositifs électroniques, chauffés de manière critique, comme des cavités résonantes de tubes à vide, des alliages à faible dilatation thermique sont utilisés pour la réalisation de tels éléments. Les appareils les plus impactés sont les gyrotrons et les cyclotrons à autorésonance Maser, d'acronyme CARM pour "Cyclotron Autoresonance Maser" en langue anglaise, qui fonctionnent à des ondes millimétriques avec des niveaux de puissance de l'ordre du Mégawatt.

Cela nécessite une gestion de charges thermiques de quelques kW/cm2. La distance entre la paroi chauffée et le flux du fluide caloporteur de refroidissement joue un rôle central dans l'amélioration du refroidissement : plus elle est petite, plus la température du point chaud diminue. A l'inverse, l'épaisseur minimale autorisée est l'épaisseur qui assure l'étanchéité au vide tv. Les solutions de refroidissement existantes les plus efficaces sont basées sur les anneaux de Raschig, d'acronyme RR pour "Raschig Rings" en langue anglaise, et l'échange de chaleur en milieu poreux, d'acronyme PH pour "Porous media Heat exchange" en langue anglaise.

Ces technologies sont limitées par le compromis critique entre contrainte thermique et dilatation radiale, ainsi que par l'inhomogénéité azimutale de la température. La flexibilité du milieu poreux oblige le concepteur à faire un compromis entre l'évacuation de la chaleur et la stabilité mécanique : si l'élément à refroidir a une paroi trop mince, sa dilatation thermique peut être trop importante et sa stabilité mécanique est gravement affectée. Si la paroi est trop épaisse, l'échange thermique est limité par la présence d'une paroi épaisse entre la surface chauffée et le flux de fluide caloporteur : cet aspect limite le transfert thermique.

La présente invention concerne le développement d'un système de refroidissement à hautes performances pour éléments soumis à des conditions thermiques élevées.

L'invention proposée répond aux besoins de refroidissement à haute efficacité de sous-systèmes, systèmes et dispositifs électriques et électroniques réels qui exigent des capacités de refroidissement croissantes afin de minimiser la déformation thermomécanique. Ces déformations de la surface interne de l'objet refroidi conduisent à une variation de la fréquence de fonctionnement ainsi qu'à une éventuelle diminution du rendement du dispositif électronique.

Les sous-ensembles critiques de dispositifs électroniques nécessitent un refroidissement efficace pour être appliqués aux anodes (tubes grillagés), aux collecteurs (Klystrons et TOP) et aux cavités (Gyrotrons et CARM). Les véritables échangeurs de chaleur les plus performants fonctionnent actuellement avec un fluide, qui est souvent de l'eau.

Le rôle du fluide caloporteur est de réduire la température de la surface chauffée. La chaleur chauffe le fluide et est évacuée par l'écoulement de ce dernier à travers le circuit de refroidissement. Cela peut être fait en augmentant le coefficient de transfert de chaleur entre l'élément chauffé et le fluide caloporteur tout et en gardant le fluide caloporteur aussi près que possible de la surface chauffée.

Il est notamment connu d'utiliser des mini-canaux permettant de pallier partiellement ces inconvénients, mais produisant des contraintes mécaniques importantes.

Les solutions connues de refroidissement à mini-canaux sont affectées de plusieurs inconvénients qui produisent des problèmes mécaniques importants en termes de contraintes mécaniques induites dans la cavité, bien supérieures aux limites acceptées, au-dessus desquelles les matériaux sont sujets à des déformations plastiques et fissurations.

Ces solutions utilisent souvent deux éléments ou plus, généralement constitués de matériaux différents : un élément intérieur enveloppé par un élément extérieur. Les circuits de mini-canaux réels, proposés dans la littérature, s'ils sont réalisés, supposent de mettre en œuvre les mini-canaux comme des canaux en ligne droite dans un seul bloc de matériau ou de les percer dans l'un des deux blocs distincts.

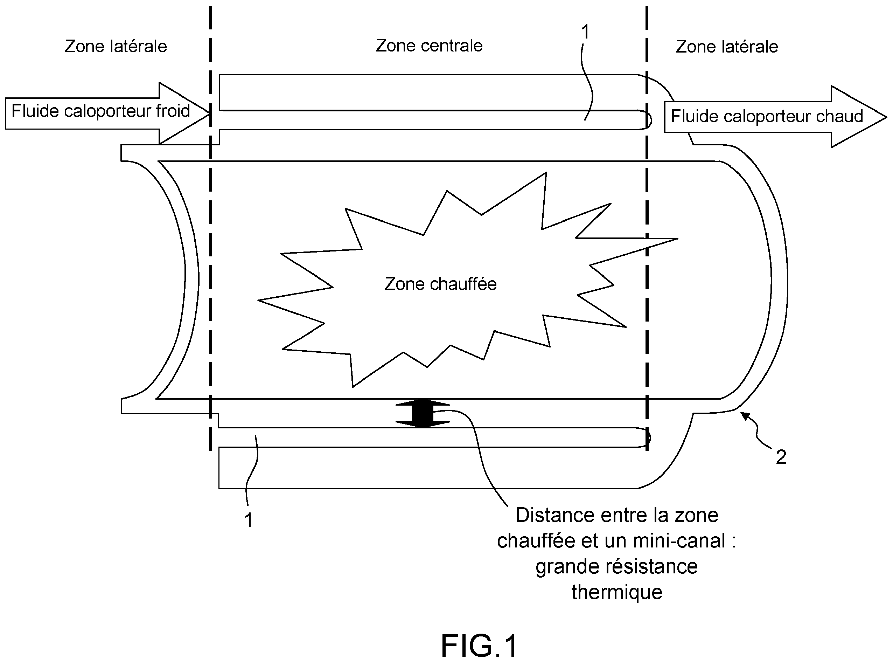

Dans le cas d'un seul bloc de matériau, comme illustré schématiquement sur la [Fig.1], il est connu d'utiliser un réseau de mini-canaux rectilignes 1 mis en œuvre en un seul bloc 2. Ce bloc 2 est souvent constitué d'une structure axisymétrique creuse formée de cylindres creux présentant deux diamètres extérieurs différents pour trois zones différentes le long de la coordonnée axiale : un diamètre extérieur plus petit pour les zones latérales et un diamètre plus grand pour une zone centrale qui contient les mini-canaux 1.

Dans cette configuration, une certaine distance entre un mini-canal 1 et la paroi chauffée à refroidir est requise, car aucune courbe n'est autorisée dans le trajet du canal le long de la coordonnée axiale. Cette distance peut se traduire par une résistance thermique considérable.

Les opérations de fraisage et perçage des canaux ayant des trajectoires rectilignes, les mini-canaux 1 ne peuvent pas être placés à une distance constante (sur leur longueur) de la paroi chauffée si l'élément à refroidir a une forme interne non cylindrique (par exemple les cavités du gyrotron sont coniques) car un mini-canal droit sur un élément incliné est à une distance différente de la cavité en différents points du mini-canal. Aussi, un refroidissement non uniforme se produit.

La distance entre la paroi chauffée et le flux de fluide caloporteur est limitée par la présence de matière intermédiaire nécessaire à la réalisation des éléments et ne peut être minimisée jusqu'à l'épaisseur limitée par l'étanchéité au vide tv.

Dans le cas de plusieurs blocs il est connu d'autres solutions mises en œuvre en assemblant des éléments séparés par brasage ou collage de ces blocs. Souvent, seulement deux blocs sont nécessaires. Le bloc intérieur a en général la surface chauffée, et le bloc extérieur enveloppe le bloc intérieur. L'utilisation de deux blocs est susceptible d'avoir les inconvénients qui suivent.

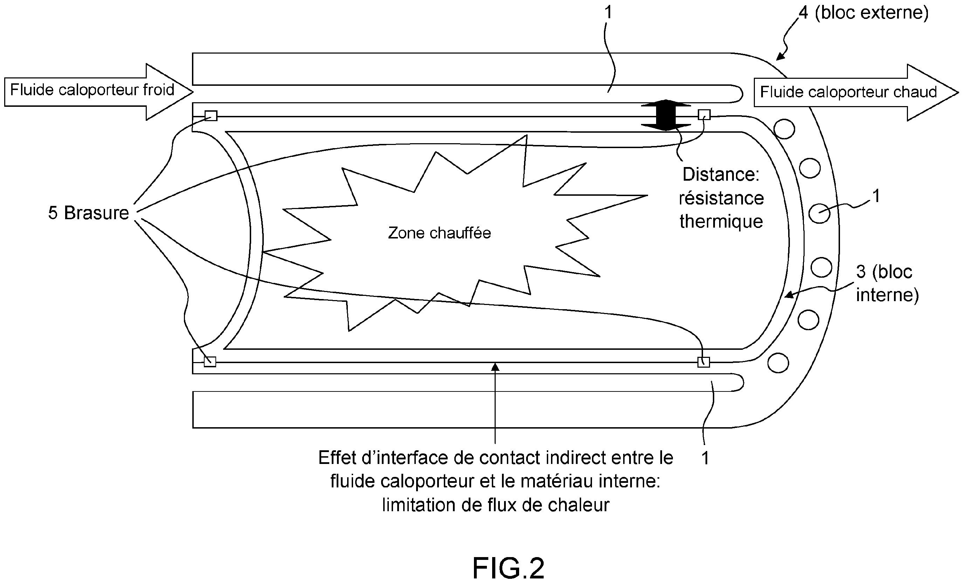

Le contact imparfait entre les blocs 3, 4, comme illustré sur la [Fig.2] se comporte comme une impédance thermique. Si la brasure ou colle 5 est localisée dans une région limitée, par exemple par des brasures ou collages par des fils circulaires, le contact restant entre les deux (ou plusieurs) blocs 3, 4 se traduit par un contact imparfait, qui se traduit par conséquent par une inévitable résistance thermique de contact.

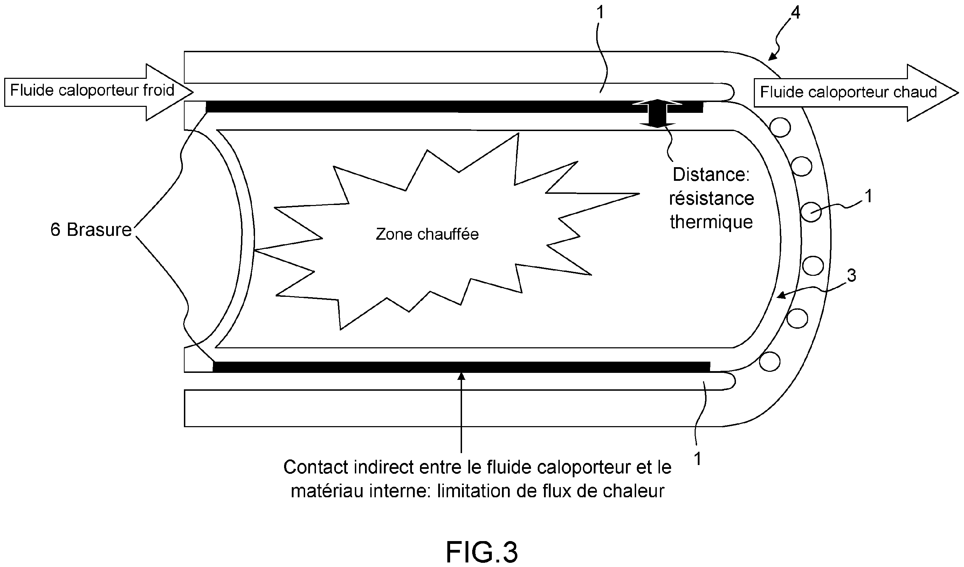

La présence de la brasure 6, intercalée entre ces blocs 3, 4, comme illustré sur la [Fig.3] présente les deux inconvénients qui suivent. Si l'alliage est présent sur tout le plan sous un mini-canal 1, des effets de bord se produisent à l'interface et limitent l'extraction de chaleur, se comportant comme une résistance thermique. En outre, la présence de brasure 6 entre les blocs 3, 4 introduit le risque de fabrication d'obstruer certains mini-canaux 1 qui, pour être atténué, amène à limiter le nombre de mini-canaux 1.

Dans ces deux cas de brasage, ces circuits doivent être mis en œuvre dans des régions de matériau fermées, notamment en perçant un unique élément ou en fraisant la surface externe d'un élément coaxial interne à insérer dans un élément coaxial externe qui ferme les mini-canaux. Il n'est donc pas possible de réaliser de mini-canal 1 ayant des formes complexes comme des courbes, en raison des limitations d'usinage. La technologie additive pourrait résoudre le problème du profil incurvé mais, dans l'état de l'art, les matériaux déposés par la technologie additive ne peuvent pas supporter une sollicitation particulière de dilatation thermique se référant aux tolérances de conception souhaitées des dimensions une fois que l'élément considéré est chauffé. Sinon ils peuvent présenter des dilatations thermiques importantes, ou ne peuvent pas répondre aux exigences de rugosité et de conductivité électrique. Par conséquent, dans des conditions de températures élevées, cette technologie additive ne peut pas être utilisée.

Dans tous les cas, la structure 4 qui entoure les mini-canaux 1 exerce une contrainte mécanique s'opposant à la dilatation thermique du bloc interne, provoquant des contraintes mécaniques.

La distance minimale entre un mini-canal et la paroi directement chauffée peut limiter la stabilité mécanique de l'élément à refroidir : afin de réduire la résistance thermique, le flux de refroidissement doit circuler le plus possible près de la paroi chauffée. Dans ce cas, la faible épaisseur du matériau entre le mini-canal et la paroi à refroidir ne peut pas assurer la rigidité nécessaire et des déformations indésirables peuvent se produire. Au fur et à mesure que le mini-canal s'approche de la paroi à refroidir, le bloc de matériau diminue en dimensions exposant l'ensemble du système à un manque de rigidité mécanique et de stabilité. Une distance minimale assurant la stabilité mécanique t_{M}, doit être interposée entre les parois chauffées et refroidies. En conséquence, l'épaisseur limitée par l'étanchéité au vide t_{V} ne peut pas être atteinte et le transfert de chaleur est réduit.

Les mini-canaux traversent toute la longueur de l'objet cylindrique à refroidir, provoquant une inhomogénéité dans le profil de température axial, en cas de charges thermiques, qui présente un pic très élevé dans leur distribution axiale. Cela provoque des contraintes mécaniques dans la structure en raison du gradient thermique axial élevé.

Le profil rectiligne d'un mini-canal entraîne une distance constante entre le flux de fluide et la surface chauffée. Si une charge thermique non uniforme le long des mini-canaux est présente, une minimisation du pic de température sur la surface chauffée n'est pas possible.

La [Fig 4] représente un état de l'art de mini-canaux 1 formés par des rainures 7 sur la surface externe de la paroi 8 d'une cavité interne 9 et d'une chemise 10.

Les [Fig.5] et [Fig.6] représentent également d'autres vues du mode de réalisation de la [Fig.4].

Dans tous ces cas, la structure 10 qui est reliée aux extrémités de l'élément à refroidir 9 exerce une contrainte mécanique de direction axiale s'opposant à la dilatation thermique de l'élément interne 9 provoquant des contraintes mécaniques.

Dans tous les cas, l'unique entrée de fluide caloporteur, localisée dans une certaine position, confère une vitesse élevée au fluide caloporteur à proximité de l'entrée elle-même. La vitesse du fluide caloporteur est plus faible loin de l'entrée. En conséquence, l'extraction de chaleur est réduite loin de l'entrée du fluide caloporteur et la température de l'élément à refroidir est azimutalement inhomogène.

Un but de l'invention est de pallier les problèmes précédemment cités.

L'invention proposée vise à améliorer le refroidissement et la robustesse thermomécanique de l'élément sur lequel elle peut être appliquée. Par exemple, cette solution peut être appliquée aux cavités, aux collecteurs et à tout élément devant être refroidi.

Toute disposition géométrique de l'élément à refroidir peut bénéficier de l'invention proposée : des géométries cylindriques, carrées ou coniques ainsi que des géométries tronconiques peuvent faire l'objet de l'application du circuit de refroidissement à mini canaux routés.

Cette solution peut être appliquée aussi bien aux tubes électroniques ou aux accélérateurs de particules aussi bien à état solide qu'à éléments passifs. Le dispositif auquel s'applique particulièrement bien l'invention est le Gyrotron.

Il est proposé, selon un aspect de l'invention, Système électronique comprenant :
- une enveloppe externe ;
- une paroi d'une cavité interne à refroidir ;
- au moins une liaison fixe fixant la paroi externe de la cavité interne à refroidir à l'enveloppe externe ;
- un circuit de refroidissement à fluide caloporteur comprenant des rainures sur la surface externe de la paroi de cavité interne et une chemise comprenant une portion flexible disposée à fleur de la surface externe de la paroi externe de la cavité interne, formant des mini-canaux avec lesdites rainures, ayant une composante longitudinale non nulle, la portion flexible (18) comprenant une première partie (18a) extrêmale d'une première épaisseur supérieure à une deuxième épaisseur d'une deuxième partie (18b) contigüe de la portion flexible (18), la deuxième partie (18b) étant contigüe à une troisième partie (17c) de la chemise (17) d'une troisième épaisseur supérieure aux première et deuxième épaisseurs, et en contact avec une enveloppe (23) disposée à l'extérieur de l'enveloppe externe (11) ;
- au moins une extension radiale de la paroi de cavité interne réalisant des points de liaison destinés à maintenir en place la chemise ; et
- un espace entre la paroi externe de cavité interne et la chemise au niveau de la portion flexible de la chemise.

Selon un mode de réalisation, la première épaisseur est au moins deux fois supérieure à la deuxième épaisseur, et la troisième épaisseur est au moins deux fois supérieure à la deuxième épaisseur.

Dans un mode de réalisation, le système comprend au moins trois points de liaison pour lier en translation longitudinale la chemise et la paroi de cavité interne.

Selon un mode de réalisation, un point de liaison comprend une brasure et/ou soudure et/ou thermo-rétractation.

Dans un mode de réalisation, le système comprend un soufflet extensible dans l'enveloppe externe.

Selon un mode de réalisation, le système comprend au moins une entrée du circuit de refroidissement dans l'enveloppe externe débouchant sur l'espace entre l'enveloppe externe et la chemise, de sorte que le trajet d'un fluide caloporteur depuis ladite entrée jusqu'aux mini-canaux soit maximisé afin d'homogénéiser la vitesse axiale du fluide dans ledit espace.

Dans un mode de réalisation, un mini-canal est rectiligne ou courbe.

Selon un mode de réalisation, un mini-canal a une section circulaire, demi-circulaire ou rectangulaire.

Dans un mode de réalisation, le système comprend un distributeur de fluide caloporteur comprenant l'enveloppe disposée à l'extérieur de l'enveloppe externe pour former une chambre de fluide caloporteur disposée au-dessus de plusieurs entrées dans l'enveloppe externe débouchant sur l'espace entre l'enveloppe externe et la chemise.

Selon un mode de réalisation, lesdites entrées du distributeur de fluide caloporteur sont disposées circulairement sur l'enveloppe externe.

Dans un mode de réalisation, les entrées sont de forme rectangulaire et/ou circulaire et/ou carrées, et/ou semi-circulaires.

Selon un mode de réalisation, une rainure formant mini-canal comprend un milieu poreux.

Selon un mode de réalisation, l'enveloppe externe comprend des couches de matière poreuse de base céramique ou métallique (par exemple mouse de tungstène ou rhénium ou ultramet^{®}).

Dans un mode de réalisation, la paroi de cavité interne comprend du cuivre mélangé à des particules céramiques d'alumine, notamment Glidcop^{®}.

Selon un mode de réalisation, le système est une cavité résonante, un tube électronique sous vide ou un gyrotron.

L'invention sera mieux comprise à l'étude de quelques modes de réalisation décrits à titre d'exemples nullement limitatifs et illustrés par les dessins annexés sur lesquels les figures:
[Fig.1] illustre schématiquement un système électronique à refroidissement par mini-canaux de l'état de l'art ;
[Fig.2] illustre schématiquement un système électronique à refroidissement par mini-canaux de l'état de l'art ;
[Fig.3] illustre schématiquement un système électronique à refroidissement par mini-canaux de l'état de l'art ;

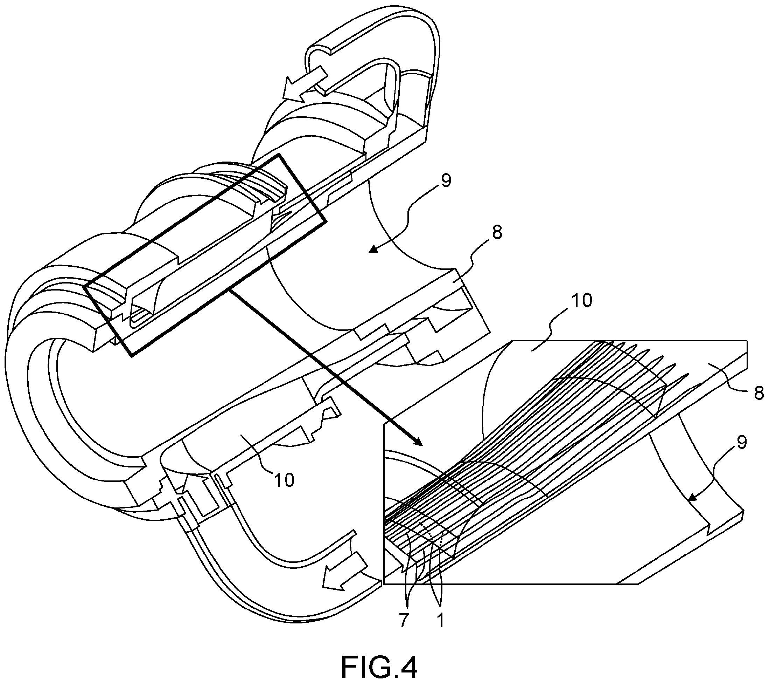

[Fig.4] illustre schématiquement un système électronique à mini-canaux formés par des rainures sur la surface externe de la paroi d'une cavité interne et d'une chemise, selon l'état de l'art ;

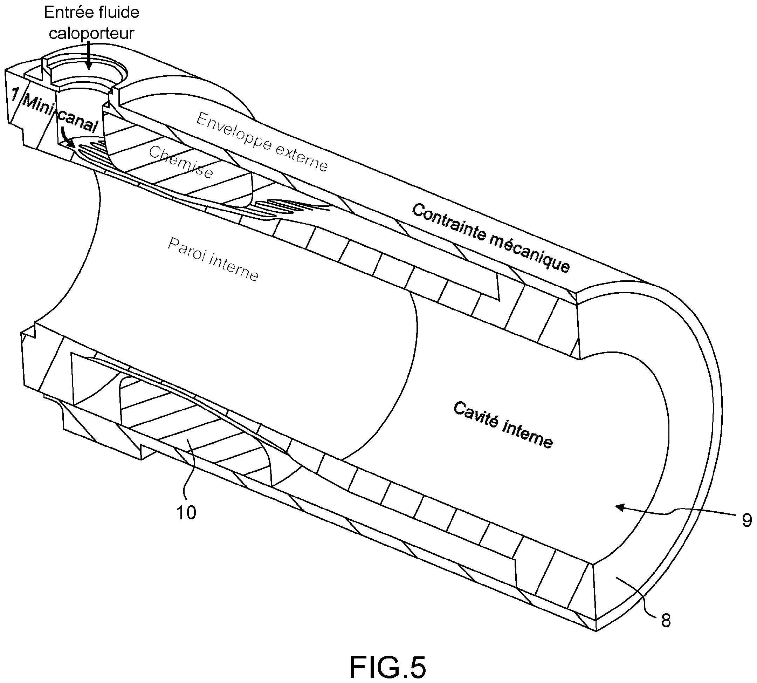

[Fig.5] illustre schématiquement une autre vue du système de la [Fig.4], selon l'état de l'art ;

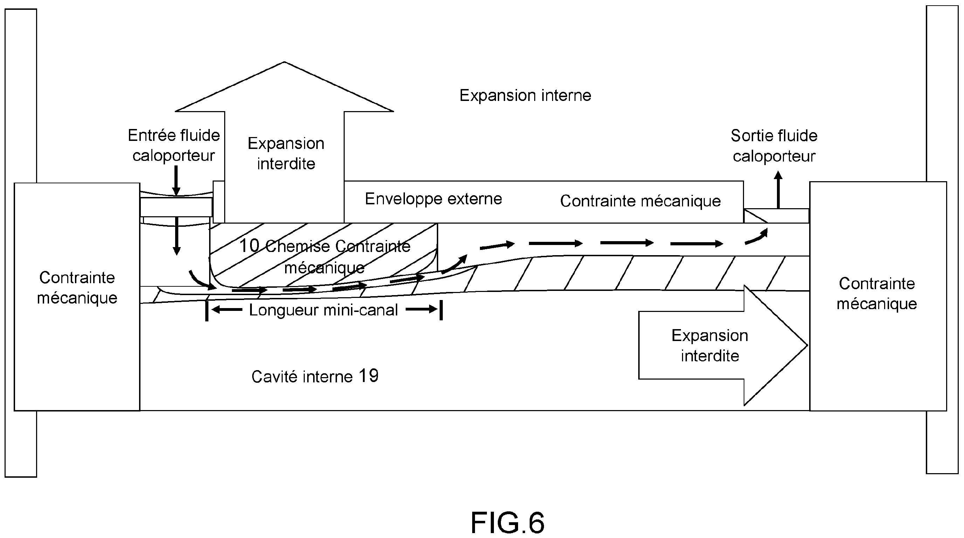

[Fig.6] illustre schématiquement une autre vue du système de la [Fig.4], selon l'état de l'art ;

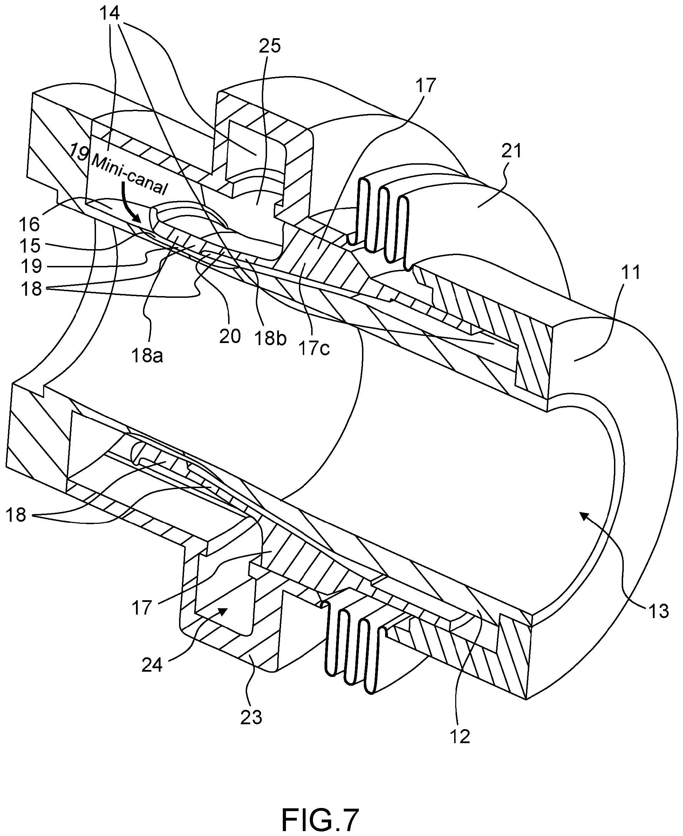

[Fig.7] illustre schématiquement un système électronique à mini-canaux formés par des rainures sur la surface externe de la paroi d'une cavité interne et d'une chemise, selon un aspect de l'invention ;

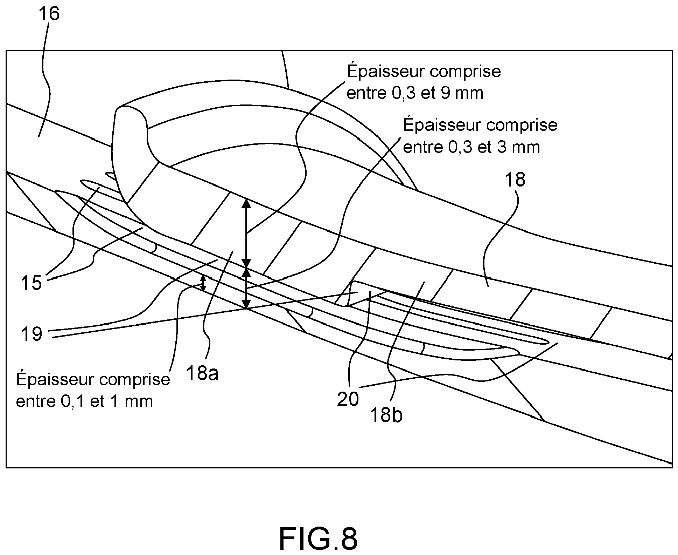

[Fig.8] illustre schématiquement une autre vue du système de la [Fig.7], selon un aspect de l'invention ;

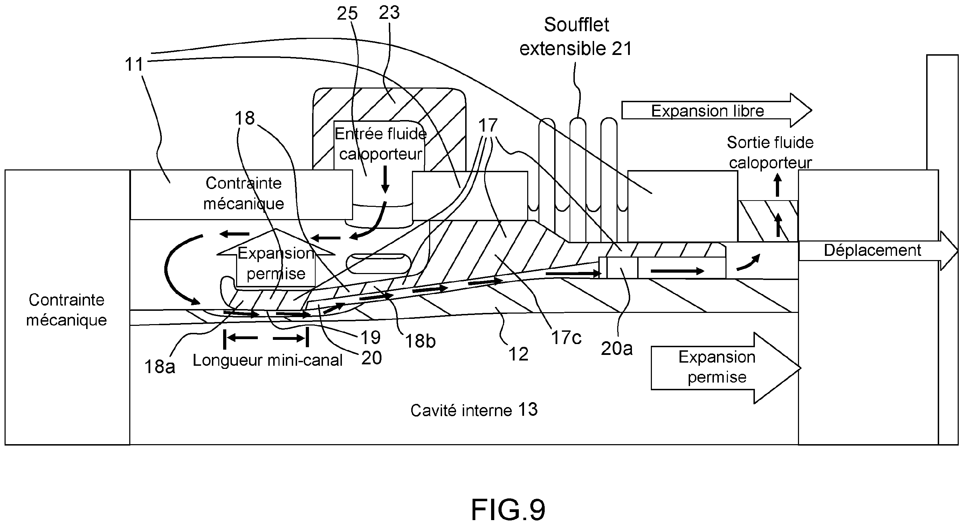

[Fig.9] illustre schématiquement une autre vue du système de la [Fig.7], selon un aspect de l'invention ;

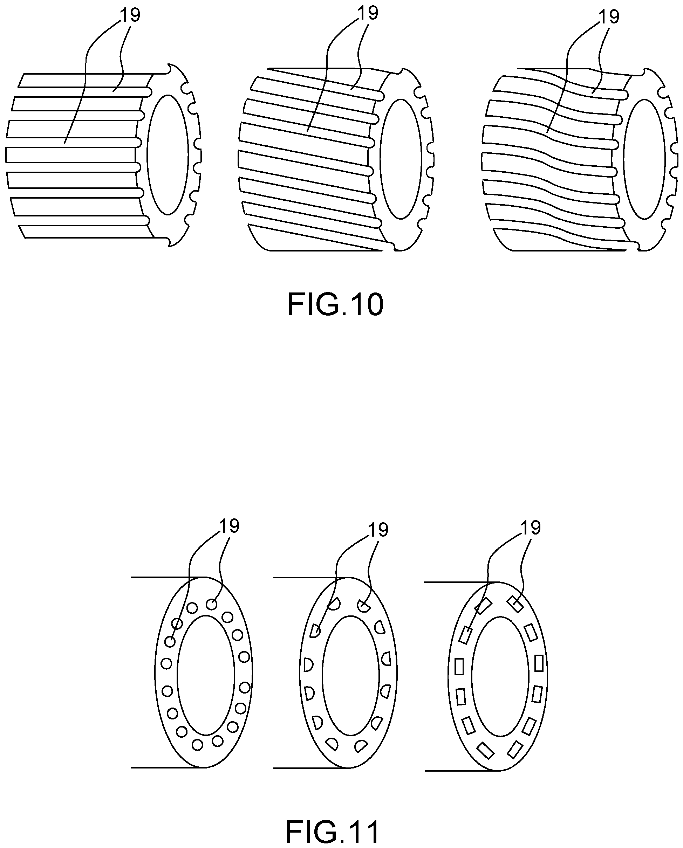

[Fig.10] illustre schématiquement des exemples de trajet d'un mini-canal dans un plan transversal, selon un aspect de l'invention ;
[Fig.11] illustre schématiquement des exemples de section d'un mini-canal, selon un aspect de l'invention ;

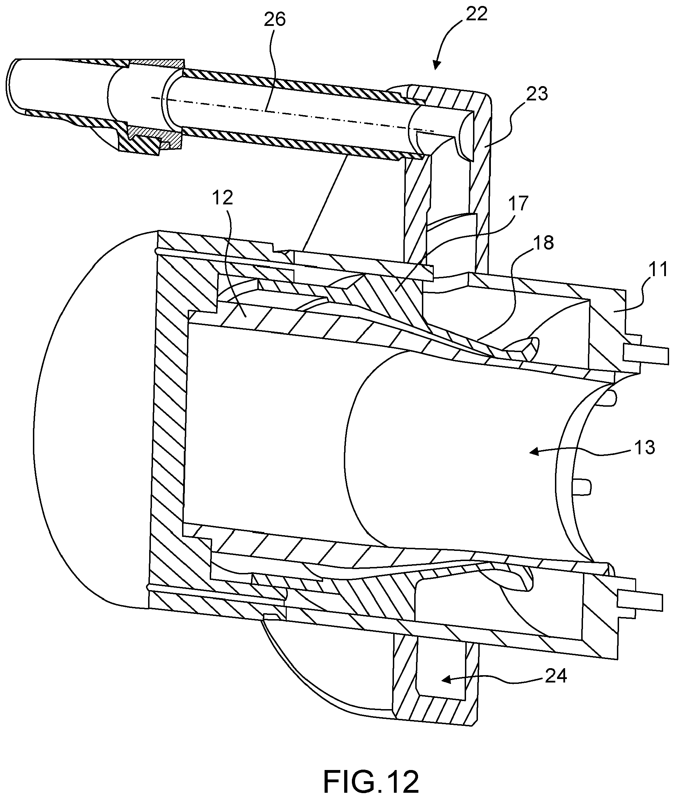

[Fig.12] illustre schématiquement la présence d'un distributeur de fluide caloporteur, selon un aspect de l'invention ;

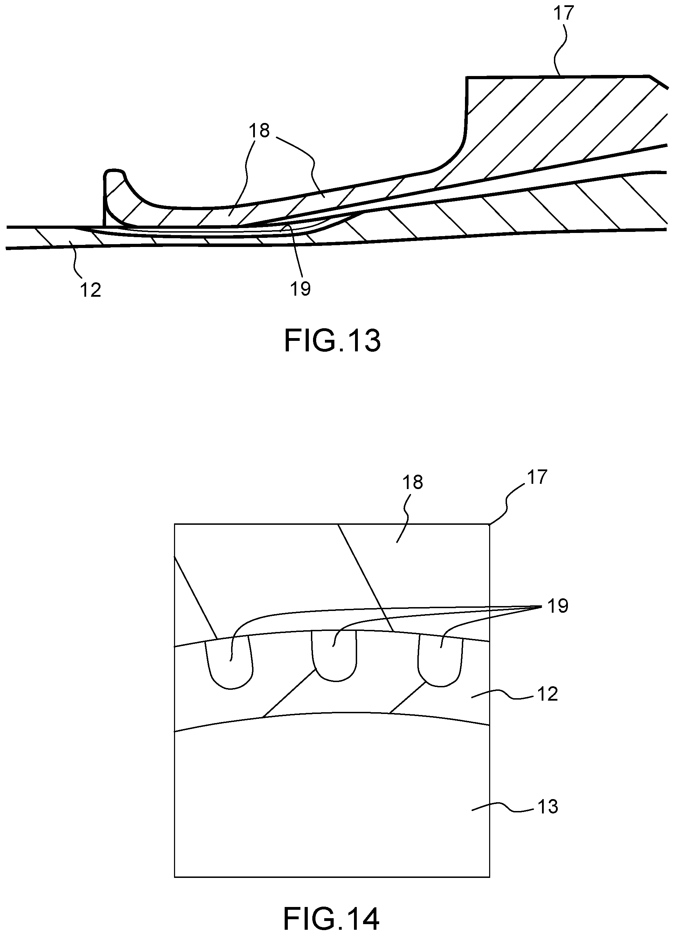

[Fig.13] illustre schématiquement le détail d'un mini-canal, selon un aspect de l'invention ;
[Fig.14] illustre schématiquement la section d'un mini-canal, selon un aspect de l'invention ;

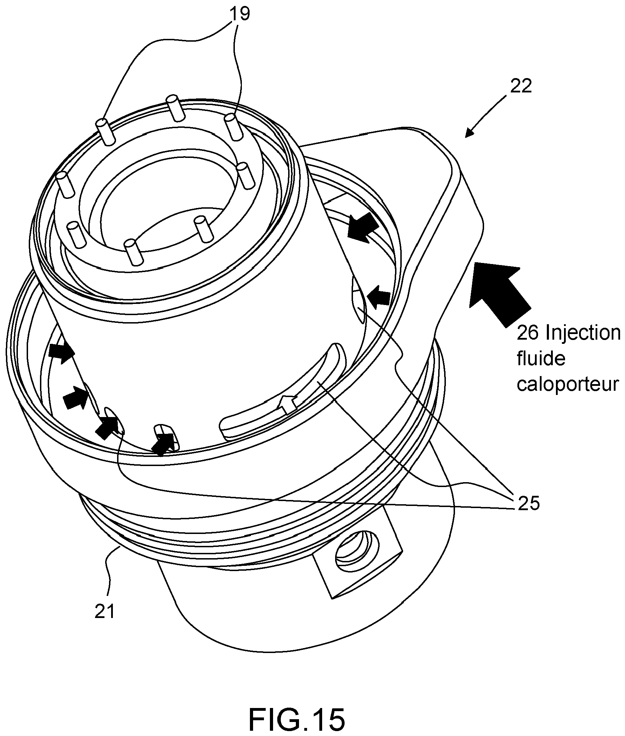

[Fig.15] illustre schématiquement un exemple de réalisation d'un distributeur de fluide caloporteur, selon un aspect de l'invention ;

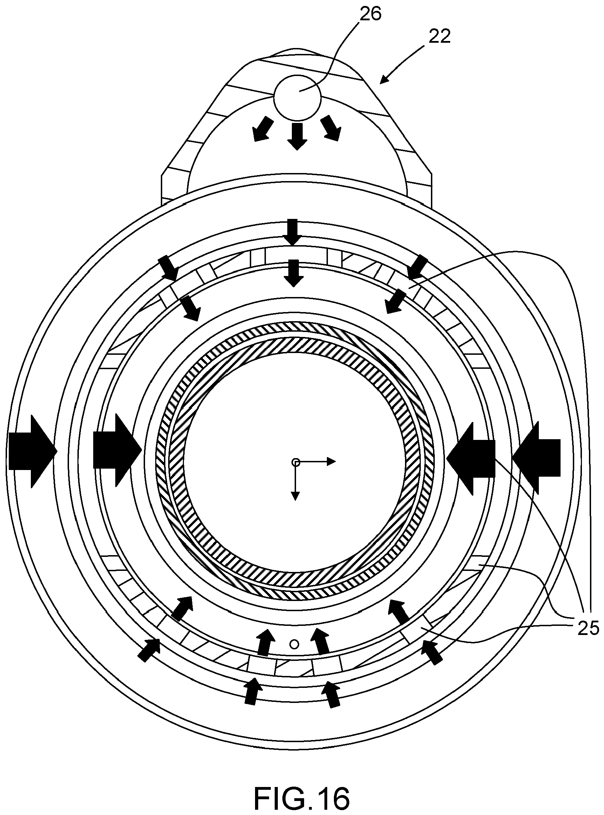

[Fig.16] illustre schématiquement une vue de section du distributeur de la [Fig.15], selon un aspect de l'invention ;

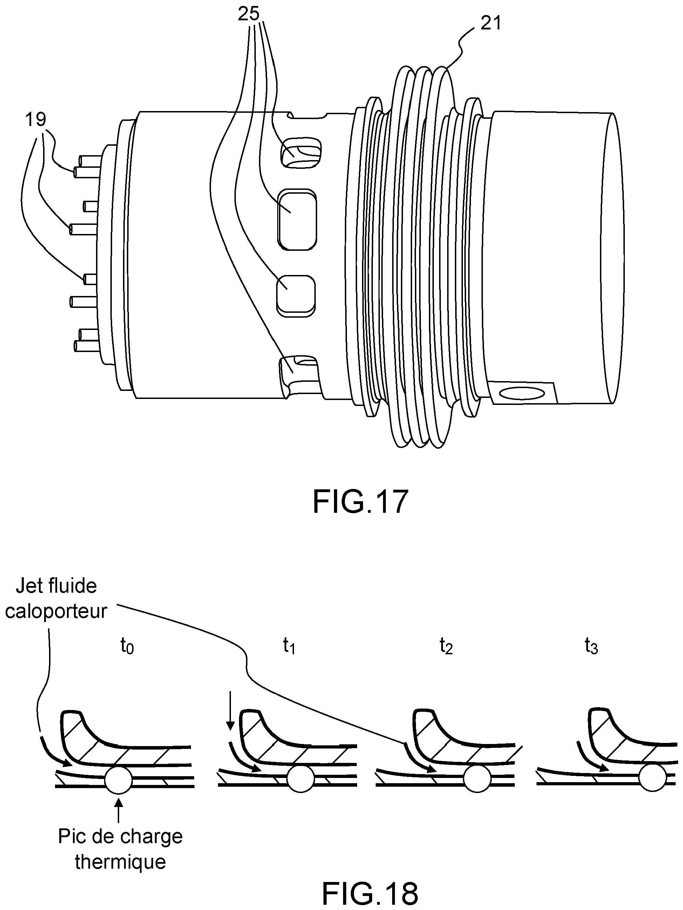

[Fig.17] illustre schématiquement une vue de l'intérieur du distributeur de la [Fig.15], selon un aspect de l'invention ;
[Fig.18] illustre schématiquement l'évolution du pic de charge thermique, selon un aspect de l'invention ;

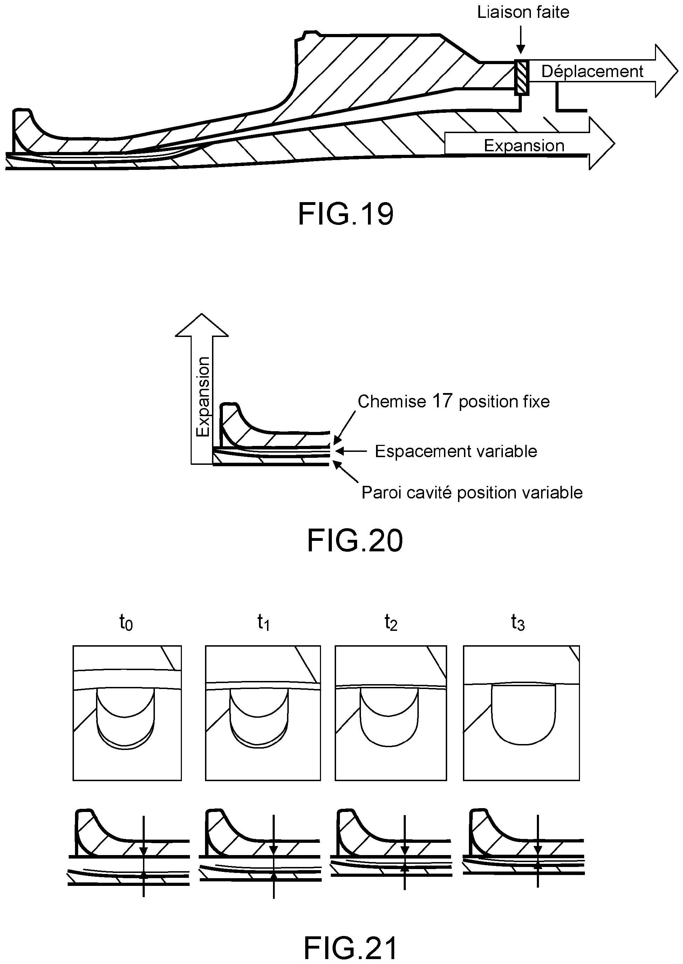

[Fig.19] illustre schématiquement les effets longitudinaux de la charge thermique, selon un aspect de l'invention ;
[Fig.20] illustre schématiquement les effets transversaux de la charge thermique, selon un aspect de l'invention ;
[Fig.21] illustre schématiquement les effets transversaux de la charge thermique, selon un aspect de l'invention ;

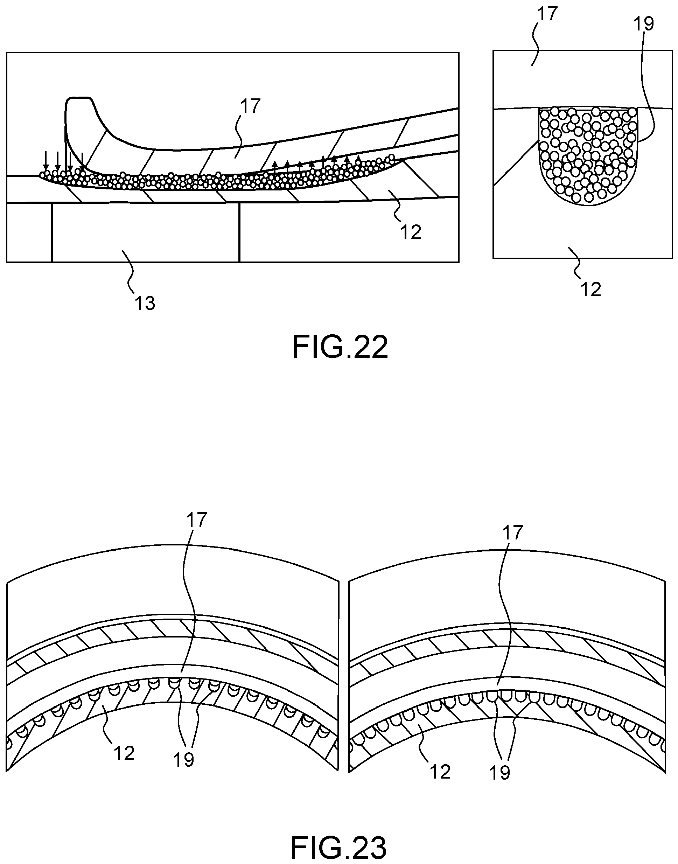

[Fig.22] illustre schématiquement la présence de milieu poreux dans les mini-canaux, selon un aspect de l'invention ;
[Fig.23] illustre schématiquement la différence entre les modes de réalisation avec et sans présence de milieu poreux dans les mini-canaux, selon un aspect de l'invention ;

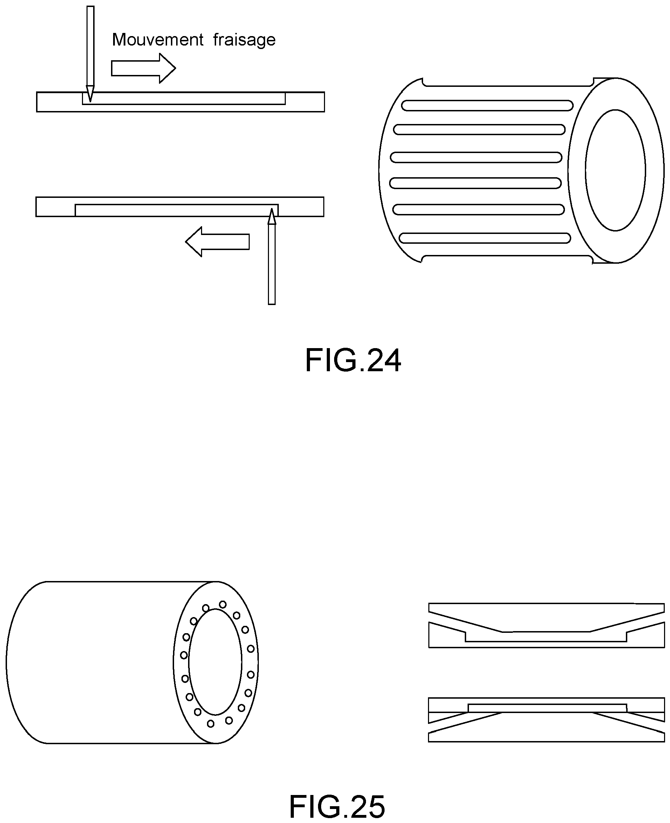

[Fig.24] illustre schématiquement un mode de réalisation d'un système, selon un aspect de l'invention ;
[Fig.25] illustre schématiquement un mode de réalisation d'un système, selon un aspect de l'invention.

Sur l'ensemble des figures, les éléments ayant des références identiques sont similaires.

Le système électronique proposé, comme représenté sur les [Fig.7], [Fig.8] et [Fig.9] comprend :
- une enveloppe externe 11 ;
- une paroi 12 de cavité interne 13 à refroidir ;
- au moins une liaison fixe 5 fixant la paroi 12 de cavité interne 13 à refroidir à l'enveloppe externe 11 ;
- un circuit de refroidissement 14 à fluide caloporteur comprenant des rainures 15 sur la surface externe 16 de la paroi externe 12 de la cavité interne 13 et une chemise 17 comprenant une portion flexible 18 disposée à fleur de la surface externe 16 de la paroi externe 12 de la cavité interne 13, formant des mini-canaux 19 avec lesdites rainures 15, ayant une composante longitudinale non nulle, la portion flexible (18) comprenant une première partie (18a) extrêmale d'une première épaisseur supérieure à une deuxième épaisseur d'une deuxième partie (18b) contigüe de la portion flexible (18), la deuxième partie (18b) étant contigüe à une troisième partie (17c) de la chemise (17) d'une troisième épaisseur supérieure aux première et deuxième épaisseurs, et en contact avec une enveloppe (23) disposée à l'extérieur de l'enveloppe externe (11) ;
- au moins une extension radiale de la paroi 12 de cavité interne 13 réalisant des points de liaison destinés à maintenir en place la chemise 17 ;
- un espace 20 entre la paroi externe 12 de cavité interne 13 et la chemise 17 au niveau de la portion flexible 18 de la chemise 17.

Une chemise est une pièce cylindrique emmanchée en force.

De manière préférentielle, la première épaisseur est au moins deux fois supérieure à la deuxième épaisseur, et la troisième épaisseur est au moins deux fois supérieure à la deuxième épaisseur.

Le système électronique comprend au moins trois points de liaison ou une liaison continue pour lier en translation longitudinale la chemise 17 et la paroi 12 de cavité interne 13. Un point de liaison 20a ou une liaison continue peut comprendre une brasure et/ou soudure et/ou thermo-rétractation. Par exemple, les extensions radiales peuvent être réalisées avec des pions, par exemple 4 pions 20a, ou avec une extension radiale continue contenant des ouvertures.

Le système électronique peut comprendre un soufflet extensible 21 dans l'enveloppe externe 11. Le fluide caloporteur peut comprendre de l'eau, de l'air ou de l'huile.

Le circuit de refroidissement à mini-canaux 19 comprend un réseau de mini-canaux de petite taille 19, typiquement de diamètre compris entre 0.2 mm et 2 mm s'ils sont circulaires, ou de surface comprise entre π/100 mm2 et π mm2, dans lesquels circule un fluide caloporteur servant au refroidissement de la cavité interne 13. La distance entre le flux de fluide caloporteur et la paroi de cavité interne peut être minimisée jusqu'à la distance minimale qui assure l'étanchéité au vide tv.

La faible longueur d'un mini-canal 19 est due à l'entrée du canal, qui doit être située en correspondance du pic de charge thermique. Cela permet d'exploiter l'entrée des mini-canaux 19 à très grande vitesse, ce qui se traduit par un coefficient de transfert de chaleur plus important que dans le reste des mini-canaux, correspondant à la suite du trajet du fluide caloporteur, exactement dans la zone de pointe (la zone ou est présente le maximum de la charge thermique). La conséquence de cette conception est un profil de température plus plat ou constant le long de la coordonnée axiale car le jet de fluide froid est dirigé près du maximum de la charge thermique. Par conséquent, le meilleur refroidissement permet une dilatation thermique mineure des matériaux qu'impriment de faibles forces d'expansion sur la chemise 17 qui est donc sujette à des contraintes mécaniques plus faibles. Un autre avantage d'un mini-canal court est la réduction significative des pertes de charge réparties le long des mini-canaux, donc une réduction des pertes de charge totales du circuit, notamment la moitié des pertes de charge par rapport à l'état de l'art (2 - 3 bar à la place de 5 - 6 bar pour des débits de fluide atour de 45 - 55 l/min).

Ces mini-canaux sont réalisés entre deux éléments différents : éventuellement réalisés avec deux matériaux différents : la cavité interne 13, à faible coefficient de dilatation thermique, typiquement compris entre 16 µm/m K et 17 µm/m K (généralement du cuivre mélangé à des particules céramiques d'alumine) et la chemise 17, à haute conductivité thermique, typiquement compris entre 17.5 µm/m K et 18 µm/m K (généralement du cuivre).

L'élément extérieur coaxial ou chemise 17 est mis en œuvre par une structure extérieure vide et flexible, qui suit la dilatation thermique de l'élément intérieur coaxial ou cavité interne 13, réduisant les contraintes mécaniques qui pourraient être induites dans la structure.

Typiquement, pour une partie de la paroi 12 de la cavité interne 13 comprenant les rainures 15 ayant une épaisseur comprise entre 0,1 et 1 mm, l'épaisseur de la deuxième partie 18b de la portion flexible 18 serait typiquement comprise entre 0,3 et 3 mm, comme illustré sur la figure 8.

Les rapports d'épaisseurs entre les première partie extrêmale 18a, deuxième partie 18b, et partie 17c permettent à la paroi 12 de la cavité interne 13 de se dilater sans une contrainte mécanique significative mais plutôt comparable à la contrainte thermique, grâce à la portion particulièrement flexible 18, qui permet à la chemise 17 de s'élargir en augmentant son diamètre sous l'effet de la dilatation thermique de la paroi 12 de la cavité interne 13. Ainsi, le niveau de contrainte mécanique à l'interface entre la paroi 12 et la portion flexible 18 est inférieur ou égal à la contrainte thermique qui s'exercerait à la surface externe de la paroi 12 au cas où la portion flexible 18 ne serait pas présente, ou si à sa place il y avait des anneaux de Rashing.

En outre, la portion particulièrement flexible 18 de la chemise 17 peut s'élargir en augmentant son diamètre sous l'effet du débit de l'eau qui traverse les mini canaux 19. La portion particulièrement flexible 18 de la chemise 17 peut également se rétrécir en réduisant son diamètre sous l'effet du flux d'eau.

Le terme "flexible" est utilisé pour caractériser la capacité de la chemise de mettre en place ces deux caractéristiques mentionnées ci-dessus.

Un distributeur 22 de fluide caloporteur comprenant une injection 26 de fluide caloporteur, une enveloppe 23 disposée à l'extérieur de l'enveloppe externe 11 pour former une chambre 24 de fluide caloporteur disposée au-dessus de plusieurs entrées 25 dans l'enveloppe externe 11 débouchant sur l'espace entre l'enveloppe externe 11 et la chemise 17.

La chemise 17 sert également de distributeur de fluide pour homogénéiser la vitesse du fluide caloporteur.

Les mini-canaux 19 peuvent comprendre au moins une courbure. Une telle courbure permet à un mini-canal 19 canal de se rapprocher au plus près de la paroi chauffée 12 et, le cas échéant, de surmonter la brasure si des points de brasure sont présents aux extrémités de la cavité. Un mini-canal courbé 19 atteint (plus en profondeur) le matériau de la paroi 12 de la cavité interne 13 permettant au flux de fluide caloporteur d'être en contact direct avec la partie de la paroi 12 la plus proche de la cavité interne 13, la plus chauffée. Cela permet d'améliorer le transfert de chaleur uniquement dans les zones caractérisées par le pic de charge thermique, résultant en un profil de températures axial plus homogène, évitant les contraintes mécaniques.

Le trajet d'un mini-canal 19, dans une plan transversal à la direction du fluide caloporteur (i.e. sensiblement transversal à l'axe de la cavité lorsqu'elle est cylindrique) peut être rectiligne, incliné ou coudé, comme représenté sur la [Fig.10].

La section d'un mini-canal 19 peut avoir n'importe quelle forme géométrique, comme une forme circulaire, semi-circulaire, carrée, ou rectangulaire, dont la [Fig.11] illustre quelques exemples. Une forme comprenant un arc est préférée pour exploiter la décharge de force.

Le circuit de refroidissement 14 à mini-canaux 19 peut être réalisé dans n'importe quelle disposition géométrique (cylindrique, carrée, conique, conique, ...) de la paroi 12 de la cavité interne 13 à refroidir.

Le soufflet souple extensible 21 permet l'expansion de la paroi 12 à refroidir en éliminant les contraintes qui auraient été appliquées par d'autres éléments connectés.

Le circuit de refroidissement 14 est un système dynamique évolutif dans le temps : la section et la position d'un mini-canal 19 varient pendant le processus de chauffage jusqu'à atteindre un état stable, grâce à l'allongement axial et radial du système chauffé. Le mouvement dynamique du système est contrôlé en température.

[Fig.12] représente notamment un mode de réalisation du distributeur 22 de fluide caloporteur, dans un mode de réalisation dépourvu de soufflet extensible 21.

La présente invention permet la réalisation (par brasage, soudage ou collage par thermo-rétraction de différents éléments) d'un circuit de refroidissement 14 pour lequel une faible résistance thermique est présente entre la surface à refroidir de la paroi 12 et le fluide caloporteur, tout en assurant l'intégrité et la stabilité mécanique des matériaux pour limiter les déformations induites par les dilatations thermiques tout en maîtrisant les contraintes mécaniques et thermiques.

La présente invention améliore la gestion thermique au moyen d'une section et d'une position optimisées des mini-canaux 19.

Le transfert de chaleur est maximisé en minimisant la distance entre le fluide caloporteur et la paroi intérieure chauffée 12 tout en assurant une marge de sécurité pour l'étanchéité au vide. Cette distance peut être minimisée jusqu'à l'épaisseur limitée par l'étanchéité au vide tv.

Le transfert de chaleur est amélioré et permet une réduction sensible de la température avec une limitation conséquente de la contrainte thermique.

Le flux de fluide caloporteur est en contact direct avec l'élément à refroidir (paroi 12) sans éléments intermédiaires ni alliages de brasure/soudure.

La section du canal le long de la direction de l'écoulement du fluide caloporteur peut être incurvée afin de s'approcher en profondeur au plus près de la paroi chauffée 12 à refroidir.

Pour une cavité de gyrotron, le refroidissement peut être mis en œuvre avec une épaisseur minimale sous un mini-canal allant de 0,1 à 1 mm, un nombre de canaux variant de 50 à 200 unités, la section d'un mini-canal est composée de deux zones: une zone de section semi-circulaire de diamètre d'environ allant de 0,1 à 1 mm et une zone de section rectangulaire de côtés d'environ allant de 0,1 à 1 mm.

Par exemple, pour une cavité de gyrotron de 100 GHz à 200 GHz, le refroidissement peut être mis en œuvre avec une épaisseur minimale sous un mini-canal allant de 0,8 à 1 mm, un nombre de canaux variant de 50 à 90 unités, la section d'un mini-canal est composée de deux zones: une zone de section semi-circulaire de diamètre d'environ 1mm et une zone de section rectangulaire de côtés d'environ 0,5 et 0,7 mm, l'espacement radial entre les canaux étant similaire à la largeur radiale des canaux.

La présente invention améliore la gestion des contraintes et la dilatation thermique.

Un tel système limite la dilatation thermique en appliquant des contraintes mécaniques modérées (par rapport aux circuits mini-canaux de l'état de l'art) par l'enveloppe externe 11 sur la paroi 12 de cavité interne 13 coaxial.

L'entrée d'un mini-canal 19, où le transfert de chaleur convectif maximal est observé, est située près du pic de la charge thermique. Cela permet de minimiser le pic de température sur la surface chauffée et d'obtenir un profil de température "plus plat", entraînant des contraintes thermiques plus faibles.

La possibilité des matériaux de ne pas se dilater permet de ne pas créer de contraintes mécaniques importantes. Le niveau de contrainte est maintenu au même niveau que les cavités réelles des anneaux de Raschig tout en améliorant considérablement le transfert de chaleur.

L'élément extérieur coaxial est réalisé sous la forme d'une structure vide et souple, appelée chemise 17 qui exerce des contraintes mécaniques modérées sur l'élément intérieur coaxial, la paroi 12 de cavité interne 13 pendant qu'il se dilate en chauffant, telle qu'illustrée sur la [Fig.13].

La section d'un mini-canal 19 peut contenir un élément arqué pour exploiter le principe de décharge de force typique de l'arc. Une paroi plus épaisse alternée avec les mini-canaux 19 assure la stabilité mécanique, comme illustré sur la [Fig. 14].

La présente invention améliore l'homogénéité thermique et limite les déformations anisotropes conséquentes au moyen d'un homogénéisateur mis en œuvre au moyen d'un distributeur 22 de fluide caloporteur à deux étages. Un exemple de réalisation du distributeur 22 est représenté en détails sur les [Fig.15], [Fig.16] et [Fig.17].

Une arrivée de fluide caloporteur est disposée autour de l'enveloppe externe 11 : des entrées 25 ou trous étroits sont placés près de l'injection 26 du fluide caloporteur et des trous plus gros sont placés plus loin de l'injection du fluide caloporteur alors que d'autres trous de taille moyenne sont placés dans le côté opposé à l'injection (où les deux composantes de la vitesse radiale qui se séparent en proximité de l'injection se rejoignent). Le distributeur 22 se présente comme un ensemble d'entrées 25 multiples dans lesquelles la vitesse du fluide caloporteur est constante pour différentes positions ainsi qu'à différentes distances du point d'injection 26 de fluide. En conséquence, la vitesse axiale du fluide caloporteur est constante le long de la direction azimutale.

La chambre de distribution secondaire 24 est mise en place par la chemise 17 pour finalement homogénéiser la vitesse du fluide caloporteur dans le sens d'entrée dans les mini-canaux 19, comme illustré sur la [Fig.9]. Le fluide caloporteur arrivant avec un impact de vitesse radiale homogène sur la paroi de la chemise 17, le fluide caloporteur est dévié vers les entrées des mini-canaux 19.

Une entrée de mini-canal 19 est située près du pic de charge thermique, pour exploiter le coefficient de transfert de chaleur élevé dû à la vitesse élevée du fluide caloporteur. Avant d'atteindre l'état d'équilibre, la position du pic de charge thermique se déplace vers la droite, comme illustré sur les [Fig.18] et [Fig.19] le long de la coordonnée axiale en raison des déformations thermiques de la surface interne. L'invention proposée résout ce problème en réalisant le circuit de refroidissement comme un système dynamique évolutif dans le temps dont la géométrie se modifie lors du chauffage et du refroidissement : le transfert de chaleur (ainsi que la vitesse du fluide caloporteur et la perte de charge) est contrôlé en température.

La position axiale de l'enveloppe coaxiale du distributeur 22 de fluide caloporteur est contrôlée par la température de la cavité 13 (grâce à sa dilatation thermique axiale) : elle suit la position du pic de charge au cours de l'évolution du transitoire de chauffe jusqu'à une position stable.

Dans ce but, un déplacement axial correspondant à la dilatation thermique axiale de l'élément interne coaxial (cavité 13) est appliqué à l'élément externe coaxial (enveloppe du distributeur 22 de fluide caloporteur).

L'élément externe coaxial (enveloppe du distributeur 22 de fluide caloporteur) est relié à la section libre de la cavité 13. En régime permanent, le pic de charge thermique est déplacé vers une certaine position (dans les gyrotrons, vers le cône ascendant). L'invention permet d'adresser les jets de fluide caloporteur au plus près du pic de charge thermique pendant que la cavité 13 chauffe. La dilatation thermique de la cavité 13 est utilisée pour déplacer la chemise 17 : la position de l'entrée de fluide caloporteur en entrée d'un mini-canal 19 est contrôlée par la dilatation thermique de la cavité 13 : pendant que la cavité 13 se dilate, la chemise 17 se déplace, fournissant l'entrée du mini-canal 19 à suivre l'évolution de la position du pic de charge thermique.

Comme représenté sur les [Fig.20] et [Fig.21], la section transversale des mini-canaux 19 est contrôlée en température : un espace est laissé entre la paroi 12 extérieure de la cavité 13 (rainure) et la paroi intérieure de la chemise 17, qui est maintenu à froid, en conséquence un by-pass est présent au démarrage du chauffage et le bypass diminue progressivement jusqu'à atteindre le régime permanent lorsque la section des mini-canaux 19 atteint la forme nominale. Au début du chauffage transitoire de la cavité 13, une dérivation existe entre la cavité et la chemise 17, d'où l'ouverture des mini-canaux. Pendant que la cavité 13 se dilate radialement, les mini-canaux 19 sont activés. A régime permanent, les mini-canaux 19 atteignent leur section transversale finale.

Un troisième niveau de distribution du fluide, similaire au primaire, peut être situé à la sortie autour de l'arbre : des trous étroits sont placés près de l'extraction du fluide et des trous plus grands sont placés loin. La structure se traduit par un ensemble de sorties multiples. L'effet est l'augmentation de l'homogénéité azimutale de la répartition de la pression à la sortie. Ceci provoque une meilleure répartition azimutale de la vitesse du fluide dans les canaux et par conséquent une répartition azimutale plus homogène de la température, comme démontré par des calculs numériques basés sur la géométrie du Gyrotron Thales TH1507U.

En variante, comme illustré sur les [Fig.22] et [Fig.23], il est possible en exploitant l'avantage du principe de l'échangeur de chaleur à milieu poreux.

Afin d'améliorer l'échange thermique, les mini-canaux 19 peuvent comprendre la présence de milieux poreux déposés à l'intérieur des mini-canaux 19. Les effets de cette configuration sont principalement l'augmentation de la surface d'échange thermique, la réduction de la sous-couche laminaire près de la paroi et la promotion du mélange des fluides. Une fois le mini-canal 19 usiné, la mousse constitutive peut être déposée dans le mini-canal 19. Après la solidification, l'élément intérieur coaxial peut être ré-usiné pour ajuster le diamètre extérieur.

Du fait de la présence du milieu poreux dans un mini-canal 19, le nombre de mini-canaux 19 peut être augmenté par rapport à la solution de mini-canaux 19 vides et l'espacement entre les mini-canaux peut être diminué jusqu'à 1/10 de l'espacement radial des mini-canaux. Ceci est possible car la présence du milieu poreux introduit une certaine robustesse mécanique.

Comparée à un échangeur de chaleur traditionnel à milieux poreux, cette solution a une stabilité mécanique améliorée, elle intègre le distributeur de fluide à double étage et elle exploite la géométrie dynamique évolutive dans le temps contrôlée en température.

Comme représenté sur les [Fig.24] et [Fig.25] la présente invention peut être réalisée par fraisage et brasage, soudage ou collage par thermo-rétraction de deux éléments ou par formage de cuivre Galvano ou fabrication additive 3D d'un deuxième élément sur un premier élément.

Le processus d'usinage est relativement simple et conforme aux procédures de fabrication de l'état de l'art.

La [Fig.24] représente de manière simplifiée le procédé de réalisation par fraisage/brasage, dans lequel l'élément intérieur coaxial est usiné pour percer la face arrière des canaux, et comme illustré sur la [Fig.25], l'élément extérieur coaxial est inséré, et brasé, soudé ou collé loin des mini-canaux.

Il est également possible d'utiliser un procédé par formation de cuivre galvanique : les profils des mini-canaux 19 sur l'élément intérieur coaxial sont percés par des procédures d'usinage traditionnelles, les profils de la limite des mini-canaux 19 qui sont partagés avec le matériau extérieur sont réalisés par dépôt de cire perdue : une quantité opportune de cire est déposée et ajustée par des procédures de perçage traditionnelles pour obtenir le moule négatif des canaux, l'élément extérieur coaxial est réalisé par formage de cuivre galvanique, la cire étant enlevée au moyen d'un processus thermique, enfin, le profil de l'élément extérieur coaxial est ajusté par des procédés de perçage traditionnels.

Le même procédé peut être obtenu par fabrication additive de l'élément extérieur, à condition que le matériaux générés par fabrication additive soient conformes aux exigences de conductibilité thermique, de rugosité surfacique, de limite élastique et de contrainte à la rupture exigées par l'application considérée (la plus concernée est le gyrotron).

Cette solution peut être appliquée à tous les tubes électroniques et dispositifs électroniques ainsi qu'aux dispositifs à semi-conducteurs ou éléments passifs qui doivent être refroidis.

Toute disposition géométrique de l'élément à refroidir peut bénéficier de l'invention proposée : des géométries telles que cylindriques, carrées ou coniques ainsi que tronconiques peuvent faire l'objet de l'application du circuit de refroidissement à mini-canaux.

Le refroidissement des cavités du gyrotron est une application particulièrement intéressante de l'invention proposée.

## Revendications

1. Système électronique comprenant :
- une enveloppe externe (11);
- une paroi (12) d'une cavité interne (13) à refroidir;
- au moins une liaison fixe fixant la paroi externe (12) de la cavité interne (13) à refroidir à l'enveloppe externe (11);
- un circuit de refroidissement (14) à fluide caloporteur comprenant des rainures (15) sur la surface externe (16) de la paroi (12) de la cavité interne (13) et une chemise (17) comprenant une portion flexible (18) disposée à fleur de la surface externe (16) de la paroi externe (12) de la cavité interne (13), formant des mini-canaux (19) avec lesdites rainures (15), ayant une composante longitudinale non nulle, la portion flexible (18) comprenant une première partie (18a) extrêmale d'une première épaisseur supérieure à une deuxième épaisseur d'une deuxième partie (18b) contigüe de la portion flexible (18), la deuxième partie (18b) étant contigüe à une troisième partie (17c) de la chemise (17) d'une troisième épaisseur supérieure aux première et deuxième épaisseurs, et en contact avec une enveloppe (23) disposée à l'extérieur de l'enveloppe externe (11) ;
- au moins une extension radiale de la paroi 12 de la cavité interne 13 réalisant des points de liaison (20a) configurés pour maintenir en place la chemise 17 ; et
- un espace (20) entre la paroi externe (12) de la cavité interne (13) et la chemise (17) au niveau de la portion flexible (18) de la chemise (17).

2. Système électronique selon la revendication 1, dans lequel la première épaisseur est au moins deux fois supérieure à la deuxième épaisseur, et la troisième épaisseur est au moins deux fois supérieure à la deuxième épaisseur.

3. Système électronique selon la revendication 1 ou 2, comprenant au moins trois points de liaison (20a) pour lier en translation longitudinale la chemise (17) et la paroi (12) de la cavité interne (13).

4. Système électronique selon la revendication 3, dans laquelle un point de liaison (20a) comprend une brasure et/ou soudure et/ou thermo-rétractation.

5. Système électronique selon l'une des revendications précédentes, comprenant un soufflet extensible (21) dans l'enveloppe externe (11).

6. Système électronique selon l'une des revendications précédentes, comprenant au moins une entrée (25) du circuit de refroidissement (14) dans l'enveloppe externe débouchant sur l'espace entre l'enveloppe externe (11) et la chemise (17), de sorte que le trajet d'un fluide caloporteur depuis ladite entrée (25) jusqu'aux mini-canaux (19) soit maximisé

7. Système électronique selon l'une des revendications précédentes, dans lequel un mini-canal (19) est rectiligne ou courbe.

8. Système électronique selon l'une des revendications précédentes, dans lequel un mini-canal (19) a une section circulaire, demi-circulaire ou rectangulaire.

9. Système électronique selon l'une des revendications précédentes en combinaison avec la revendication 4, comprenant un distributeur (22) de fluide caloporteur comprenant l'enveloppe (23) disposée à l'extérieur de l'enveloppe externe (11) pour former une chambre (24) de fluide caloporteur disposée au-dessus de plusieurs entrées (25) dans l'enveloppe externe (11) débouchant sur l'espace entre l'enveloppe externe (11) et la chemise (17).

10. Système électronique selon la revendication 9, dans lequel lesdites entrées (25) du distributeur (22) de fluide caloporteur sont disposées circulairement sur l'enveloppe externe (11).

11. Système électronique selon la revendication 10, dans lequel les entrées (25) sont de forme rectangulaire et/ou circulaire et/ou carrées, et/ou semi-circulaires.

12. Système électronique selon l'une des revendications précédentes, dans lequel une rainure (15) formant mini-canal (19) comprend un milieu poreux.

13. Système électronique selon l'une des revendications précédentes, dans lequel l'enveloppe externe (11) comprend des couches de matière poreuse de base céramique ou métallique.

14. Système électronique selon l'une des revendications précédentes, dans lequel la paroi (12) de cavité interne (13) comprend du cuivre mélangé à des particules céramiques d'alumine.

15. Système électronique selon l'une des revendications précédentes, dans lequel la chemise (17) comprend du cuivre ou du cuivre mélangé à des particules céramiques d'alumine.

16. Système électronique selon l'une des revendications précédentes, étant une cavité résonante, un tube électronique sous vide ou un gyrotron.
